# EUROPEAN PATENT APPLICATION

(11) **EP 4 819 237 A1**
(43) Date of publication of application: **07.10.2026**
(21) Application number: 26167666.2
(22) Date of filing: 25.03.2026
(51) Int. Cl.: H01M 4/36, H01M 4/58, H01M 10/0562, H01M 4/136

(54) **BATTERY**

(30) Priority: 04.04.2025 JP 2025062161
(71) Applicant: Toyota Jidosha Kabushiki Kaisha, Toyota-shi, Aichi-ken 471-8571 (JP)
(72) Inventor: TOMITA, Masataka, Toyota-shi, Aichi-ken 471-8571 (JP)
(74) Representative: Kuhnen & Wacker Patent- und Rechtsanwaltsbüro PartG mbB

(57) **Abstract**

Provided is a battery having improved fast charge performance, the battery comprising a cathode, an electrolyte layer and an anode in this order, wherein the cathode comprising a cathode layer and a cathode collector in this order from the electrolyte layer side; wherein the cathode layer comprises, as the cathode active material, a lithium manganese iron phosphate (LMFP) having an olivine structure and a lithium iron phosphate (LFP) having an olivine structure; and wherein an upper limit voltage of the battery is less than 4.45 V.

## Description

### TECHNICAL FIELD

The disclosure relates to a battery.

### BACKGROUND

Various studies have been proposed for batteries as disclosed in Patent Documents 1 and 2.
Patent Document 1: Japanese translation of PCT international application No. 2024-519752
Patent Document 2: Japanese Patent No. 6132180

To improve the energy density of batteries, the use of lithium iron phosphate in combination with lithium manganese iron phosphate has been discussed. However, since the reaction potential of Mn is about 4.1 V and is close to the upper limit voltage (4.2 V to 4.3 V) of general batteries, the upper limit voltage of batteries is reached in a short time during fast charging. The fast charge performance of batteries is improved by simply increasing the upper limit voltage of batteries to 4.3 V to 4.4 V, for example. However, there are trade-offs such as frequent electrolyte decomposition.

### SUMMARY

The present disclosure was achieved in light of the above circumstances. An object of the present disclosure is to provide a battery having improved fast charge performance.

The present disclosure includes the following embodiments.
<1> A battery comprising a cathode, an electrolyte layer and an anode in this order,
   wherein the cathode comprising a cathode layer and a cathode collector in this order from the electrolyte layer side;
   wherein the cathode layer comprises, as the cathode active material, a lithium manganese iron phosphate (LMFP) having an olivine structure and a lithium iron phosphate (LFP) having an olivine structure;
   wherein an upper limit voltage of the battery is less than 4.45 V; and
   wherein, when the cathode layer is divided into two equal parts in thickness direction and, of the two equal parts, one part on the electrolyte layer side and the other part on the cathode collector side are considered as a first cathode layer and a second cathode layer, respectively, a content of the lithium iron phosphate in the first cathode layer is larger than a content of the lithium iron phosphate in the second cathode layer.
<2> The battery according to the above <1>, wherein, in the second cathode layer on the cathode collector side, a ratio of the lithium iron phosphate to a total of the lithium manganese iron phosphate and the lithium iron phosphate is less than 10% by mass.
<3> The battery according to the above <1> or <2>, wherein, in the lithium manganese iron phosphate, a ratio of Mn to a total of Mn and Fe (Mn/(Mn+Fe)) is 50% by mole or more.
<4> The battery according to any one of the above <1> to <3>, wherein the upper limit voltage of the battery is 4.40 V or less.
<5> The battery according to any one of the above <1> to <4>, wherein, in the first cathode layer on the electrolyte layer side, a ratio of the lithium iron phosphate to a total of the lithium manganese iron phosphate and the lithium iron phosphate is 20% by mass or more.

According to the present disclosure, the battery having improved fast charge performance, is provided.

### BRIEF DESCRIPTION OF THE DRAWING

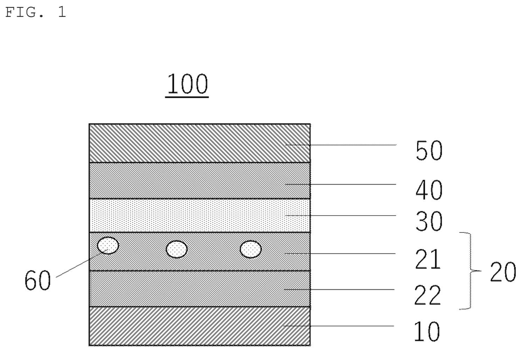

FIG. 1 is a schematic sectional view of an example of the structure of the battery of the present disclosure.

### DETAILED DESCRIPTION

Hereinafter, the embodiments of the present disclosure will be described in detail. Matters that are required to implement the present disclosure (such as common structures and production processes of batteries not characterizing the present disclosure) other than those specifically referred to in the Specification, may be understood as design matters for a person skilled in the art based on conventional techniques in the art. The present disclosure can be implemented based on the contents disclosed in the Specification and common technical knowledge in the art.

In addition, dimensional relations (such as length, width and thickness) in the drawing do not reflect actual dimensional relations.

In the present disclosure, unless otherwise noted, a singular noun may encompass a plural noun. For example, the word "particle" may encompass "particles" (a group of particles).

In the present disclosure, an example of the method for calculating the average particle diameter of particles is as follows. First, for a particle shown in an image taken at an appropriate magnification (e.g., 50,000x to 1,000,000x) with a transmission electron microscope (hereinafter referred to as TEM) or a scanning electron microscope (hereinafter referred to as SEM), the diameter when the particle is considered spherical, is calculated. Such a particle diameter calculation by TEM or SEM observation is carried out on 2 to 300 particles of the same type, and the average of the diameters of the particles is determined as the average particle diameter.

According to the present disclosure, a battery comprising a cathode, an electrolyte layer and an anode in this order is provided,
wherein the cathode comprising a cathode layer and a cathode collector in this order from the electrolyte layer side;
wherein the cathode layer comprises, as the cathode active material, a lithium manganese iron phosphate (LMFP) having an olivine structure and a lithium iron phosphate (LFP) having an olivine structure;
wherein the upper limit voltage of the battery is less than 4.45 V; and
wherein, when the cathode layer is divided into two equal parts in thickness direction and, of the two equal parts, one part on the electrolyte layer side and the other part on the cathode collector side are considered as the first cathode layer and the second cathode layer, respectively, the content of the lithium iron phosphate in the first cathode layer is larger than the content of the lithium iron phosphate in the second cathode layer.

In the present disclosure, when the cathode layer, which mainly contains the lithium manganese iron phosphate (LMFP) having the olivine structure, is divided into the electrolyte layer-side part and the cathode collector-side part, the content of the lithium iron phosphate (LFP) having the same olivine structure in the electrolyte layer-side part is larger than the content of the same in the cathode collector-side part. Since the LFP, which has a low working potential, is disposed more on the electrolyte layer side of the cathode layer, which is preferentially reactive during fast battery charging, the battery thus provided can suppress an increase in battery voltage during fast battery charging, can suppress the decomposition of an electrolyte solution, is low in cost, and is superior in fast charge performance.

FIG. 1 is a schematic sectional view of an example of the structure of the battery of the present disclosure. As shown in FIG. 1, a battery 100 (the battery of the present disclosure) includes a cathode collector 10, a cathode layer 20, an electrolyte layer 30, an anode layer 40 and an anode collector 50 in this order.

In the battery 100, when the cathode layer 20 is divided into two equal parts in thickness direction and, of the two equal parts, one part on the electrolyte layer 30 side and the other part on the cathode collector 10 side are considered as the first cathode layer 21 and the second cathode layer 22, respectively, a lithium iron phosphate (LFP) 60 is contained in the first cathode layer 21 and is not contained in the second cathode layer 22. That is, the content of the LFP 60 in the first cathode layer 21 is larger than the content of the LFP 60 in the second cathode layer 22.

The battery of the present disclosure includes the cathode, the electrolyte layer and the anode in this order.

The upper limit voltage of the battery is less than 4.45 V, and it may be 4.40 V or less, 4.35 V or less, or 4.30 V or less.

### [Cathode]

The cathode includes the cathode layer and the cathode collector in this order from the electrolyte layer side.

The cathode layer may be disposed on one surface of the cathode collector, or it may be disposed on both surfaces of the cathode collector.

The cathode layer contains the cathode active material. As needed, the cathode layer may contain at least one selected from the group consisting of an electrolyte, an electroconductive material and a binder.

As the cathode active material, the cathode layer contains the lithium manganese iron phosphate (LMFP) having the olivine structure (an olivine-type crystal structure) and the lithium iron phosphate (LFP) having the olivine structure.

When the cathode layer is divided into two equal parts in thickness direction and, of the two equal parts, one part on the electrolyte layer side and the other part on the cathode collector side are considered as the first cathode layer and the second cathode layer, respectively, the content of the lithium iron phosphate in the first cathode layer is larger than the content of the lithium iron phosphate in the second cathode layer. When the content of the lithium iron phosphate in the first cathode layer is larger than the content of the lithium iron phosphate in the second cathode layer, the mass ratio of the LFP contained in the first cathode layer to the LFP contained in the second cathode layer is not particularly limited, and the mass ratio of the LFP in the first cathode layer to the LFP in the second cathode layer may be from 100:0 to 51:49 (unit: % by mass). When the first cathode layer on the electrolyte layer side contains the LFP, the second cathode layer on the cathode collector side may be free of the LFP. In the present disclosure, the case where the second cathode layer is free of the LFP encompasses the following case, for example: the case where, in the formation of the first and second cathode layers, the LFP is unintentionally contained as an impurity in a part of the second cathode layer which is close to the interface between the first cathode layer and the second cathode layer. The impurity contained in the second cathode layer may be 0.01% by mass or less.

Since the first cathode layer and the second cathode layer are obtained by dividing the cathode layer into two equal parts in thickness direction, the first cathode layer and the second cathode layer have the same thickness.

The cathode layer includes at least the first cathode layer and the second cathode layer.

As needed, the cathode layer may be divided into three equal parts in thickness direction to include the first cathode layer, the second cathode layer and the third cathode layer in this order from the electrolyte layer side. In this case, the content of the LFP in the first cathode layer on the electrolyte layer side is only required to be the largest, and the content of the LFP in the third cathode layer on the cathode collector side is only required to be the smallest. The first cathode layer, the second cathode layer and the third cathode layer have the same thickness.

As needed, the cathode layer may be divided into four equal parts in thickness direction to include the first cathode layer, the second cathode layer, the third cathode layer and the fourth cathode layer in this order from the electrolyte layer side. In this case, the content of the LFP in the first cathode layer on the electrolyte layer side is only required to be the largest; the content of the LFP in the second cathode layer is only required to be smaller than the content of the LFP in the first cathode layer; the content of the LFP in the third cathode layer is only required to be smaller than the content of the LFP in the second cathode layer; and the content of the LFP in the fourth cathode layer on the cathode collector side is only required to be the smallest. The first cathode layer, the second cathode layer, the third cathode layer and the fourth cathode layer have the same thickness.

The first cathode layer, the second cathode layer, the third cathode layer and the fourth cathode layer may be collectively referred to as "cathode layer".

In the first cathode layer on the electrolyte layer side, the lower limit of the ratio of the lithium iron phosphate (LFP) to the total of the lithium manganese iron phosphate (LMFP) and the lithium iron phosphate (LFP), that is, the lower limit of LFP/(LMFP+LFP) may be 10% by mass or more, or it may be 20% by mass or more. In consideration of energy density, the upper limit may be 50% by mass or less, or it may be 30% by mass or less.

In the second cathode layer on the cathode collector side, the ratio of the lithium iron phosphate (LFP) to the total of the lithium manganese iron phosphate (LMFP) and the lithium iron phosphate (LFP), that is, LFP/(LMFP+LFP) may be less than 10% by mass, may be 5% by mass or less, may be 1% by mass or less, may be 0.1% by mass or less, may be 0.01% by mass or less, or may be 0% by mass.

In the entire cathode layer, the lower limit of the ratio of the lithium iron phosphate (LFP) to the total of the lithium manganese iron phosphate (LMFP) and the lithium iron phosphate (LFP), that is, the lower limit of LFP/(LMFP+LFP) may be 5% by mass or more, or it may be 10% by mass or more. In consideration of energy density, the upper limit may be 25% by mass or less, or it may be 15% by mass or less.

In the lithium manganese iron phosphate (LMFP), the lower limit of the ratio of the Mn to the total of the Mn and the Fe (Mn/(Mn+Fe)) may be 50% by mole or more. The upper limit may be 90% by mole or less, or it may be 75% by mole or less.

The percentage of the cathode active material in the cathode layer is 20% by mass or more, for example. It may be 30% by mass or more, or it may be 40% by mass or more. When the percentage of the cathode active material is too small, there is a possibility that a sufficient energy density is not obtained. On the other hand, the percentage of the cathode active material in the cathode layer is 95% by mass or less, for example. It may be 70% by mass or less, or it may be 60% by mass or less. When the percentage of the cathode active material is too large, the ion conductivity and electron conductivity of the cathode layer may relatively decrease.

The cathode active material may be particles.

The average particle diameter of the cathode active material particles may be 0.5 µm or more, or it may be 1.0 µm or more, for example. The average particle diameter of the cathode active material particles may be 100 µm or less, or it may be 30 µm or less, for example.

As the electrolyte, examples include, but are not limited to, a solid electrolyte. The solid electrolyte may be an inorganic solid electrolyte such as a sulfide solid electrolyte, a halide solid electrolyte, an oxide solid electrolyte and a complex hydride solid electrolyte, or it may be an organic solid electrolyte such as a gel electrolyte.

The sulfide solid electrolyte is an electrolyte which contains a S element. In general, the sulfide solid electrolyte contains at least a Li element and a S element. The sulfide solid electrolyte may further contain a M element (M is at least one selected from the group consisting of P, As, Sb, Si, Ge, Sn, B, Al, Ga and In). Also, the sulfide solid electrolyte may contain a halogen element such as F, Cl, Br and I.

The sulfide solid electrolyte may be a glass-based (amorphous) sulfide solid electrolyte, may be a glass-ceramic-based sulfide solid electrolyte, or may be a crystal-based sulfide solid electrolyte. The sulfide solid electrolyte may have a crystal phase. As the crystal phase, examples include, but are not limited to, a Thio-LISICON-type crystal phase, an argyrodite-type crystal phase and a LGPS-type crystal phase.

The composition of the sulfide solid electrolyte is not particularly limited. As the composition, examples include, but are not limited to, xLi₂S·(1-x)P₂S₅ (where 0.5 ≤ x < 1) and yLiI·zLiBr·(100-y-z)(xLi₂S·(1-x)P₂S₅) (where 0.5 ≤ x < 1, 0 ≤ y ≤ 30 and 0 ≤ z ≤ 30). In these compositions, x may satisfy 0.7 ≤ x ≤ 0.8. Another example of the composition of the sulfide solid electrolyte is Li₇₋ₓPS₆₋ₓXₓ (where X is at least one selected from the group consisting of F, Cl, Br and I, and x satisfies 0 ≤ x < 2). Another example of the composition of the sulfide solid electrolyte is Li₄₋ₓMe₁₋ₓPₓS₄ (where 0 < x < 1 and Me is at least one selected from the group consisting of Al, Zn, In, Ge, Si, Sn, Sb, Ga and Bi). As the sulfide solid electrolyte, examples include, but are not limited to, LiI-LiBr-Li₂S-P₂S₅, LiI-Li₂S-P₂S₅, LiI-Li₂S-P₂O₅ and LiI-Li₃PO₄-P₂S₅.

As the oxide solid electrolyte, examples include, but are not limited to, a substance having a garnet-type crystal structure containing a Li element, La element, an A element (A is at least one selected from the group consisting of Zr, Nb, Ta and Al) and an O element. For example, the oxide solid electrolyte may be Li₂O-B₂O₃-P₂O₅, Li₂O-SiO₂, Li₂O-B₂O₃, Li_{1.3}Al_{0.3}Ti_{0.7}(PO₄)₃, Li₅La₃Ta₂O₁₂, Li₇La₃Zr₂O₁₂, Li₆BaLa₂Ta₂O₁₂, Li_{3.6}Si_{0.6}P_{0.4}O₄, Li₄SiO₄, Li₃PO₄, Li₃₊ₓPO₄₋ₓNₓ (where 1 ≤ x ≤ 3) or the like.

For example, the halide solid electrolyte may be a solid electrolyte containing Li, D and X (D is at least one selected from the group consisting of Ti, Al and Y, and X is F, Cl or Br).

The gel electrolyte may contain an electrolytic solution and a polymer material. The polymer material may be a material forming a polymer matrix. For example, the polymer material may contain at least one selected from the group consisting of polyvinylidene fluoride (PVdF), poly(vinylidene fluoride-co-hexafluoropropylene) (PVDF-HFP), polyacrylonitrile (PAN), PVdF-PAN, polyethylene oxide (PEO), polyethylene glycol (PEG) and derivatives thereof.

The form of the solid electrolyte may be a particulate form, from the viewpoint of good handleability.

The average particle diameter of the solid electrolyte particles is not particularly limited. It may be from 1 nm to 100 µm.

The percentage of the solid electrolyte in the cathode layer may be 1% by mass or more, for example. When the percentage of the solid electrolyte is too small, the cathode layer may have a shortage of ion conducting paths. On the other hand, the percentage of the solid electrolyte in the cathode layer may be 60% by mass or less, for example. When the percentage of the solid electrolyte is too large, the percentage of the cathode active material is relatively small, and a low energy density may be obtained.

The cathode layer may contain an electroconductive material. The electron conductivity of the cathode layer is increased by adding the electroconductive material. As the electroconductive material, examples include, but are not limited to, a carbonaceous electroconductive material, metal particles and an electroconductive polymer. As the carbonaceous electroconductive material, examples include, but are not limited to, a particulate material such as Acetylene Black (AB) and Ketjen Black (KB) and a fibrous material such as vapor-grown carbon fiber (VGCF), carbon nanotube (CNT) and carbon nanofiber (CNF).

The percentage of the electroconductive material in the cathode layer may be 0.1% by mass or more, for example. When the percentage of the electroconductive material is too small, the cathode layer may have a shortage of electron conducting paths. On the other hand, the percentage of the electroconductive material in the cathode layer may be 5% by mass or less, for example. When the percentage of the electroconductive material is too large, the percentage of the cathode active material is relatively small, and a low energy density may be obtained.

The cathode layer may contain a binder. As the binder, examples include, but are not limited to, styrene-butadiene rubber (SBR), polyimide (PI), polyacrylic acid (PAA), acrylonitrile-butadiene rubber (NBR), butadiene rubber (BR), polyvinylidene fluoride (PVdF), polytetrafluoroethylene (PTFE), a styrene-isoprene-styrene block copolymer (SIS) and an ethylene-propylene-diene copolymer (EPDM).

The percentage of the binder in the cathode layer may be 0.5% by mass or more, for example. When the percentage of the binder is too small, there is a possibility that an increase in resistance which is due to charge and discharge, cannot be sufficiently reduced. On the other hand, the percentage of the binder in the cathode layer may be 15% by mass or less, for example. When the percentage of the binder is too large, the percentage of the cathode active material is relatively small, and a low energy density may be obtained.

The thickness of the cathode layer is 0.1 µm or more and 1000 µm or less, for example. The thickness of the cathode layer may be 1 µm or more and 500 µm or less, or it may be 30 µm or more and 100 µm or less.

The method for producing the cathode layer is not particularly limited. For example, the production method may be the following method.

First, an olivine-type LFP and an olivine-type LMFP are prepared as the first cathode active material and the second cathode active material, respectively.

A slurry for the second cathode layer is obtained by mixing the second cathode active material, the electroconductive material, the binder and a solvent. The slurry is applied to the cathode collector.

Then, the first and second cathode active materials are mixed to obtain a mixed cathode active material. The mixed cathode active material, the electroconductive material, the binder and a solvent were mixed to obtain a slurry for the first cathode layer, and the slurry for the first cathode layer is applied onto the slurry for the second cathode layer.

Then, the applied slurries are dried, thereby forming the cathode layer including the second cathode layer and the first cathode layer in this order on the cathode collector.

To form the cathode layer, a press treatment (pressing the cathode layer in the thickness direction) may be performed. As the press treatment, examples include, but are not limited to, roller pressing and plate pressing.

As the solvent, examples include, but are not limited to, water, N-methylpyrrolidone (NMP), tetralin, diisobutyl ketone, butyl butyrate, mesitylene, heptane, dibutyl ether, decane, dodecane, isodecane and toluene. The solvent may contain two or more selected from these components.

As the material for the cathode collector, examples include, but are not limited to, SUS, Cr, Au, Pt, Zn, aluminum, copper, nickel, iron, titanium and carbon. The thickness of the cathode collector is 0.1 µm or more and 100 µm or less, for example. The form of the cathode collector may be a foil form, a plate form or the like. The plan view shape of the cathode collector is not particularly limited. As the shape, examples include, but are not limited to, a circular shape, an elliptical shape, a rectangular shape and any polygonal shape. The structure of the cathode collector may be such that a buffer layer, an elastic layer or a positive temperature coefficient (PTC) thermistor layer is disposed on the surface.

### [Anode]

The anode includes the anode layer. As needed, it further includes an anode collector.

The anode layer is a layer containing at least an anode active material. As needed, the anode layer may contain at least one selected from the group consisting of an electrolyte, an electroconductive material and a binder.

The anode active material may be in a particulate form or a sheet form, for example. The average particle diameter of the particles of the anode active material may be 1 µm or more, for example. The average particle diameter of the particles of the anode active material may be 30 µm or less, for example.

The anode active material may contain, for example, at least one selected from the group consisting of a carbon-based active material, a Li-based active material, a Si-based active material, a Si-C composite material and lithium titanate.

The carbon-based active material may contain, for example, at least one selected from the group consisting of graphite, soft carbon and hard carbon. The graphite is a general term for natural graphite and artificial graphite. The graphite may be a mixture of natural graphite and artificial graphite. For example, the mixing ratio (mass ratio) between the natural graphite and the artificial graphite may be as follows: "the natural graphite/the artificial graphite = 1/9 to 9/1" or "the natural graphite/the artificial graphite = 3/7 to 7/3".

As the Li-based active material, examples include, but are not limited to, Li, Li silicate and Li alloy.

As the Si-based active material, examples include, but are not limited to, Si, SiO and Si alloy.

The Si-C composite material indicates a composite material composed of a carbon-based active material (such as graphite) and a Si-based active material (such as Si). For example, fine Si particles may be dispersed in a carbon particle. For example, a Li silicate particle may be coated with a carbonaceous material (such as amorphous carbon).

As the electrolyte, electroconductive material and binder used in the anode layer, examples include, but are not limited to, those exemplified above as the electrolyte, electroconductive material and binder used in the cathode layer.

As needed, the anode layer may contain a thickener. As the thickener, examples include, but are not limited to, carboxymethyl cellulose (CMC).

As the material for the anode collector, examples include, but are not limited to, SUS, aluminum, copper, nickel, iron, titanium and carbon. The thickness of the anode collector may be in a range of from 1 µm to 50 µm, for example. The form of the anode collector may be a foil form, a plate form or the like. The plan view shape of the anode collector is not particularly limited. As the shape, examples include, but are not limited to, a circular shape, an elliptical shape, a rectangular shape and any polygonal shape. The structure of the anode collector may be such that a buffer layer, an elastic layer or a PTC thermistor layer is disposed on the surface.

### [Electrolyte layer]

The electrolyte layer is a layer formed between the cathode layer and the anode layer, and it contains at least an electrolyte. The electrolyte may be a solid electrolyte or a liquid electrolyte (an electrolytic solution).

The electrolyte layer may contain a solid electrolyte, an electrolytic solution and so on.

As the solid electrolyte, examples include, but are not limited to, those exemplified above as the solid electrolyte of the cathode layer.

As the electrolytic solution, an aqueous electrolytic solution, a non-aqueous electrolytic solution or the like can be used. They may be used alone or in combination of two or more.

The solvent of the aqueous electrolytic solution contains water as a main component. That is, when the whole amount of the solvent (a liquid component) constituting the electrolytic solution is determined as a reference (100% by mole), the water may account for 50% by mole or more, 70% by mole or more, or 20% by mole or more thereof. On the other hand, the upper limit of the proportion of the water in the solvent is not particularly limited.

While the solvent contains water as the main component, it may contain a solvent other than water. As the solvent other than water, examples include, but are not limited to, one or more selected from the group consisting of an ether, a carbonate, a nitrile, an alcohol, a ketone, an amine, an amide, a sulfur compound and a hydrocarbon. When the whole amount of the solvent (the liquid component) constituting the electrolytic solution is determined as a reference (100% by mole), the solvent other than water may be 50% by mole or less, may be 30% by mole or less, or may be 10% by mole or less.

The aqueous electrolytic solution used in the present disclosure contains an electrolyte. The electrolyte for the aqueous electrolytic solution may be selected from conventionally known electrolytes. As the electrolyte, examples include, but are not limited to, lithium salt, nitrate salt, acetate salt and sulfate salt of imidic acid compounds. More specifically, examples include, but are not limited to, lithium bis(fluorosulfonyl)imide (LiFSI), lithium bis(trifluoromethanesulfonyl)imide (LiTFSI), lithium bis(pentafluoroethanesulfonyl)imide (LiBETI), lithium bis(nonafluorobutanesulfonyl)imide, lithium nonafluoro-N-[(trifluoromethane)sulfonyl]butanesulfonylamide, lithium N,N-hexafluoro-1,3-disulfonylimide, CH₃COOLi, LiPF₆, LiBF₄, Li₂SO₄ and LiNO₃.

The concentration of the electrolyte in the aqueous electrolytic solution can be appropriately determined depending on desired battery properties, as long as the concentration does not exceed the saturation concentration of the electrolyte with respect to the solvent. This is because, when the electrolyte remains in a solid form in the aqueous electrolytic solution, the solid electrolyte may interfere with battery reaction.

For example, in the case of using LiTFSI as the electrolyte, the amount of the LiTFSI contained in the aqueous electrolytic solution may be 1 mol or more, 5 mol or more, or 7.5 mol or more per kg of the water. The upper limit of the amount is not particularly limited, and it may be 25 mol or less, for example.

As the non-aqueous electrolytic solution, one containing a lithium salt and a non-aqueous solvent is generally used.

As the lithium salt, examples include, but are not limited to, an inorganic lithium salt such as LiPF₆, LiBF₄, LiClO₄ and LiAsF₆, and an organic lithium salt such as LiCF₃SO₃, LiN(SO₂CF₃)₂(Li-TFSI), LiN(SO₂C₂F₅)₂ and LiC(SO₂CF₃)₃.

As the non-aqueous solvent, examples include, but are not limited to, ethylene carbonate (EC), propylene carbonate (PC), butylene carbonate (BC), dimethyl carbonate (DMC), diethyl carbonate (DEC), ethyl methyl carbonate (EMC), γ-butyrolactone, sulfolane, acetonitrile (AcN), dimethoxymethane, 1,2-dimethoxyethane (DME), 1,3-dimethoxypropane, diethyl ether, tetraethylene glycol dimethyl ether (TEGDME), tetrahydrofuran, 2-methyltetrahydrofuran, dimethylsulfoxide (DMSO) and mixtures thereof. From the viewpoint of obtaining high dielectric constant and low viscosity, the non-aqueous solvent may be a mixture of a cyclic carbonate compound having high dielectric constant and high viscosity (such as EC, PC and BC) and a chain carbonate compound having low dielectric constant and low viscosity (such as DMC, DEC and EMC), or it may be a mixture of EC and DEC.

The concentration of the lithium salt in the non-aqueous electrolytic solution may be from 0.3 M to 5 M, for example.

The non-aqueous electrolytic solution may contain an ionic liquid. The ionic liquid may contain, for example, at least one selected from the group consisting of sulfonium salt, ammonium salt, pyridinium salt, piperidinium salt, pyrrolidinium salt, morpholinium salt, phosphonium salt, imidazolium salt and derivatives thereof.

As the electrolyte layer, a separator which is impregnated with the above-mentioned electrolytic solution and is configured to prevent contact between the cathode layer and the anode layer, may be used.

The material for the separator is not particularly limited, as long as it is a porous film. As the material, examples include, but are not limited to, resins such as polyethylene (PE), polypropylene (PP), polyester, polyvinyl alcohol, cellulose and polyamide. Of them, the material for the separator may be polyethylene or polypropylene. The separator may have a single-layered structure or a multi-layered structure. As the separator having a multi-layered structure, examples include, but are not limited to, a separator having a two-layered structure such as PE/PP, and a separator having a three-layered structure such as PP/PE/PP and PE/PP/PE.

The separator may be a non-woven fabric such as a resin non-woven fabric and a glass fiber non-woven fabric.

### [Solid electrolyte layer]

The electrolyte layer may be a solid electrolyte layer composed of a solid.

When the electrolyte layer is the solid electrolyte layer, the solid electrolyte layer contains a solid electrolyte. As needed, it contains a binder and so on.

As the solid electrolyte used in the solid electrolyte layer, examples include, but are not limited to, those exemplified above as the solid electrolyte of the cathode layer.

The solid electrolyte may be one solid electrolyte, or it may be two or more solid electrolytes. In the case of using two or more solid electrolytes, they may be mixed together, or they may be formed into layers to obtain a multi-layered structure.

The amount of the solid electrolyte in the solid electrolyte layer is not particularly limited. For example, it may be 50% by mass or more; it may be in a range of 60% by mass or more and 100% by mass or less; it may be in a range of 70% by mass or more and 100% by mass or less; or it may be 100% by mass. The electrolytic solution contained in the solid electrolyte layer may be less than 1% by mass with respect to the total amount of the solid electrolyte layer.

As the binder, examples include, but are not limited to, a binder that can be incorporated in the above-described cathode layer.

The content of the binder in the solid electrolyte layer may be from 0% by mass to 10% by mass with respect to the total amount of the solid electrolyte layer.

The thickness of the electrolyte layer is 0.1 µm or more and 1000 µm or less, for example. The thickness of the electrolyte layer may be 0.1 µm or more and 500 µm or less, or it may be 0.1 µm or more and 100 µm or less.

In the present disclosure, the battery may further include a fixing jig for applying a fixing pressure to the cathode layer, the electrolyte layer and the anode layer along the thickness direction. Especially when the electrolyte layer is the solid electrolyte layer, the fixing pressure may be applied for the formation of good ion conducting paths and electron conducting paths. The fixing pressure is 0.1 MPa or more, for example. The fixing pressure may be 1 MPa or more, or it may be 5 MPa or more. On the other hand, the fixing pressure is 100 MPa or less, for example. The fixing pressure may be 50 MPa or less, or it may be 20 MPa or less.

### [Battery]

In the present disclosure, the type of the battery is not particularly limited. The battery of the present disclosure is typically a lithium ion battery. Also in the present disclosure, the battery may be a liquid battery in which the electrolyte layer contains an electrolytic solution, or it may be a solid-state battery in which the electrolyte layer contains a solid electrolyte. The solid-state battery may be a semi-solid-state battery or an all-solid-state battery. In the present disclosure, the semi-solid-state battery is a battery in which the electrolyte layer contains a solid component (such as an inorganic solid electrolyte) and a liquid component (such as a solvent and an electrolytic solution). In the present disclosure, the all-solid-state battery is a battery in which the electrolyte layer contains, as the electrolyte, only a solid component such as an inorganic solid electrolyte. In the present disclosure, the battery may be a primary battery or a secondary battery. Among them, the solid-state battery may be a secondary battery. This is because a secondary battery can be repeatedly charged and discharged, and it is useful as an in-vehicle battery, for example.

The form of the battery is not particularly limited. For example, it may be a coin form, a cylindrical form, a square form, a sheet form, a button form, a flat form or a laminate form.

When the battery is a cell stack consisting of stacked cells, the cell stack may be a monopolar cell stack or a bipolar cell stack.

As the applications of the battery, examples include, but are not limited to, the power source of vehicles such as a hybrid electric vehicle (HEV), a plug-in hybrid electric vehicle (PHEV), a battery electric vehicle (BEV), a gasoline vehicle and a diesel vehicle. Especially, the battery of the present disclosure may be used as the driving power supply of a hybrid electric vehicle (HEV), a plug-in hybrid electric vehicle (PHEV) or a battery electric vehicle (BEV). Also, the battery of the present disclosure may be used as the powder source of mobile objects other than vehicles, such as railroads, ships and aircraft, or it may be used as the power source of electrical appliances such as information processing devices.

The present disclosure is not limited to the above-mentioned embodiments. The above-mentioned embodiments are examples, and any that has the substantially same essential features as the technical ideas described in the claims of the present disclosure and exerts the same effects and advantages as the embodiments is included in the technical scope of the present disclosure.

### EXAMPLES

### (Example 1)

### [Production of cathode]

As the cathode active material, the first cathode active material and the second cathode active material were used, the former being an olivine-type LFP (average particle diameter 1.1 µm) and the latter being an olivine-type LMFP (average particle diameter 0.5 µm).

The composition ratio between Mn and Fe in the LMFP as the second cathode active material was as follows: Mn:Fe = 50:50 (unit: % by mole) .

The slurry for the second cathode layer was prepared, which contained the second cathode active material, CNT (as the electroconductive material) and polyvinylidene fluoride (as the binder). The slurry for the second cathode layer was applied to one surface of a 30 µm-thick Al foil (as the cathode collector) by a doctor blade so that the applied slurry amount was 13 mg/cm².

The composition of the slurry for the second cathode layer was such that the second cathode active material, the electroconductive material and the binder were in a mass ratio of 94.5:1.5:4.0.

Then, the slurry for the first cathode layer was prepared, which contained a mixed cathode active material (a mixture of the first and second cathode active materials), CNT (as the electroconductive material) and polyvinylidene fluoride (as the binder). The slurry for the first cathode layer was applied onto the slurry for the second cathode layer by the doctor blade so that the applied slurry amount was 13 mg/cm².

The percentage of the first cathode active material was 20% by mass of the mixed cathode active material.

The composition of the slurry for the first cathode layer was such that the mixed cathode active material, the electroconductive material and the binder were in a mass ratio of 94.5:1.5:4.0.

Then, the applied slurries were dried at 100°C for 10 minutes, thereby producing a cathode including the second cathode layer, the first cathode layer, and the cathode collector in this order. The cathode layers were produced so as to have the same thickness. The cathode was pressed so that the density of the second cathode layer and that of the first cathode layer were 2.3 g/cc. The structure of the produced cathode layer was such that the LFP was contained in the first cathode layer and was not contained in the second cathode layer.

### [Production of anode]

An anode slurry containing artificial graphite having an average particle diameter of 22 µm (an anode active material), SBR (a binder) and CMC (a thickener) was produced. The composition of the anode slurry was such that the anode active material, the SBR and the CMC were in a mass ratio of 88:10:2. A 15 µm-thick Cu foil was prepared as the anode collector. The anode slurry was applied to one surface of the Cu foil by the doctor blade so that the applied anode slurry amount was 13 mg/cm² (the ratio between the capacity of the cathode and that of the anode was 1.1). Then, the applied anode slurry was dried at 100°C for 10 minutes, thereby producing an anode which an anode layer was formed on the anode collector. The anode was pressed so that the density of the anode layer was 1.25 g/cc.

### [Production of battery]

The cathode, a separator having a three-layered structure of PP/PE/PP and a thickness of 16 µm, and the anode were stacked, thereby producing a battery (laminated cell). A 1.1 M LiPF₆ solution was prepared as the electrolytic solution, which contained LiPF₆ as an electrolyte and, as a solvent, ethylene carbonate (EC), dimethyl carbonate (DMC) and methyl ethyl carbonate (EMC) in a volume ratio of 30:40:30. The fixing pressure of the battery was 500 kPa.

### [Activation and characterization]

Activation and characterization of the produced cell were carried out.

Initial charging of the cell was carried out as follows. By the constant current-constant voltage method, constant current charging of the cell was carried out at a current value of 0.1 C to 4.30 V, and constant voltage charging of the cell was carried out until the constant voltage charging time reached three hours.

Then, by the constant current method, the cell was discharged at a current value of 0.1 C to 3.0 V, thereby activating the cell.

After the activation, the state of charge (ΔSOC) of the cell when the cell was charged by the constant current method at a current value of 1 C until the cell voltage reached the upper limit (4.30 V), was calculated. The result is shown in Table 1. A state of charge (ΔSOC) of 100% was used as the reference value, and it was the state of charge of the cell when the cell was charged at a current value of 0.1 C until the cell voltage reached the upper limit (4.30 V).

### (Example 2)

The battery of Example 2 was produced in the same manner as Example 1, except that in [Production of cathode], the percentage of the first cathode active material was 10% by mass of the mixed cathode active material used in the slurry for the first cathode layer. The battery of Example 2 was activated and characterized in the same manner as [Activation and characterization] of Example 1. The results are shown in Table 1.

### (Example 3)

The battery of Example 3 was produced in the same manner as Example 1, except that in [Production of cathode], a LMFP which the composition ratio between Mn and Fe was Mn:Fe = 60:40 (unit: % by mole) was used as the second cathode active material. The battery of Example 3 was activated and characterized in the same manner as [Activation and characterization] of Example 1. The results are shown in Tables 1 and 2.

### (Example 4)

The battery of Example 4 was produced in the same manner as Example 1, except that in [Production of cathode], a LMFP which the composition ratio between Mn and Fe was Mn:Fe = 75:25 (unit: % by mole) was used as the second cathode active material. The battery of Example 4 was activated and characterized in the same manner as [Activation and characterization] of Example 1. The results are shown in Table 1.

### (Comparative Example 1)

The battery of Comparative Example 1 was produced in the same manner as Example 1, except that in [Production of cathode], a cathode including a single-layered cathode layer was produced as follows. The battery of Comparative Example 1 was activated and characterized in the same manner as [Activation and characterization] of Example 1. The results are shown in Table 1.

### [Production of cathode including single-layered cathode layer]

As the cathode active material, the first cathode active material, which was an olivine-type LFP having an average particle diameter 1.1 µm, was not used, and only the second cathode active material was used. As the second cathode active material, an olivine-type LMFP (average particle diameter 0.5 µm) was used.

The composition ratio between Mn and Fe in the LMFP as the second cathode active material was as follows: Mn:Fe = 50:50 (unit: % by mole).

The slurry for the cathode layer was prepared, which contained the second cathode active material, CNT (as the electroconductive material) and polyvinylidene fluoride (as the binder). The slurry for the cathode layer was applied to one surface of a 30 µm-thick Al foil (as the cathode collector) by a doctor blade so that the applied slurry amount was 13 mg/cm².

The composition of the slurry for the cathode layer was such that the second cathode active material, the electroconductive material and the binder were in a mass ratio of 94.5:1.5:4.0.

Then, the applied slurry was dried at 100°C for 10 minutes, thereby producing a cathode including the cathode layer and the cathode collector. The cathode layer was produced so that the thickness of the cathode layer was the same as the total thickness of the first and second cathode layers of Example 1. The cathode was pressed so that the density of the cathode layer was 2.3 g/cc.

### (Comparative Example 2)

The battery of Comparative Example 2 was produced in the same manner as Comparative Example 1, except for the following: in [Production of cathode including single-layered cathode layer], as the cathode active material, the first cathode active material and the second cathode active material were used, the former being an olivine-type LFP (average particle diameter 1.1 µm) and the latter being an olivine-type LMFP (average particle diameter 0.5 µm); a mixed cathode active material (a mixture of the first and second cathode active materials) was used as the slurry for the cathode layer; and the percentage of the first cathode active material was 10% by mass of the mixed cathode active material. The battery of Comparative Example 2 was activated and characterized in the same manner as [Activation and characterization] of Comparative Example 1. The results are shown in Table 1.

### (Comparative Example 3)

The battery of Comparative Example 3 was produced in the same manner as Comparative Example 2, except that in [Production of cathode including single-layered cathode layer], the percentage of the first cathode active material was 20% by mass of the mixed cathode active material. The battery of Comparative Example 3 was activated and characterized in the same manner as [Activation and characterization] of Comparative Example 2. The results are shown in Table 1.

### (Comparative Example 4)

The battery of Comparative Example 4 was produced in the same manner as Comparative Example 1, except that in [Production of cathode including single-layered cathode layer], a LMFP which the composition ratio between Mn and Fe was Mn:Fe = 60:40 (unit: % by mole) was used as the second cathode active material. The battery of Comparative Example 4 was activated and characterized in the same manner as [Activation and characterization] of Comparative Example 1. The results are shown in Table 1.

### (Comparative Example 5)

The battery of Comparative Example 5 was produced in the same manner as Comparative Example 2, except that in [Production of cathode including single-layered cathode layer], a LMFP which the composition ratio between Mn and Fe was Mn:Fe = 60:40 (unit: % by mole) was used as the second cathode active material. The battery of Comparative Example 5 was activated and characterized in the same manner as [Activation and characterization] of Comparative Example 2. The results are shown in Tables 1 and 2.

### (Comparative Example 6)

The battery of Comparative Example 6 was produced in the same manner as Comparative Example 1, except that in [Production of cathode including single-layered cathode layer], a LMFP which the composition ratio between Mn and Fe was Mn:Fe = 75:25 (unit: % by mole) was used as the second cathode active material. The battery of Comparative Example 6 was activated and characterized in the same manner as [Activation and characterization] of Comparative Example 1. The results are shown in Table 1.

### (Comparative Example 7)

The battery of Comparative Example 7 was produced in the same manner as Comparative Example 2, except that in [Production of cathode including single-layered cathode layer], a LMFP which the composition ratio between Mn and Fe was Mn:Fe = 75:25 (unit: % by mole) was used as the second cathode active material. The battery of Comparative Example 7 was activated and characterized in the same manner as [Activation and characterization] of Comparative Example 2. The results are shown in Table 1.

### (Comparative Example 8)

The battery of Comparative Example 8 was produced in the same manner as Comparative Example 5. In [Activation and characterization], the state of charge (ΔSOC) of the cell when, after the activation, the cell was charged by the constant current method at a current value of 1 C until the cell voltage reached the upper limit (4.35 V), was calculated. The result is shown in Table 2.

### (Comparative Example 9)

The battery of Comparative Example 9 was produced in the same manner as Comparative Example 5. In [Activation and characterization], the state of charge (ΔSOC) of the cell when, after the activation, the cell was charged by the constant current method at a current value of 1 C until the cell voltage reached the upper limit (4.40 V), was calculated. The result is shown in Table 2.

### (Comparative Example 10)

The battery of Comparative Example 10 was produced in the same manner as Comparative Example 5. In [Activation and characterization], the state of charge (ΔSOC) of the cell when, after the activation, the cell was charged by the constant current method at a current value of 1 C until the cell voltage reached the upper limit (4.45 V), was calculated. The result is shown in Table 2.

### (Comparative Example 11)

The battery of Comparative Example 11 was produced in the same manner as Comparative Example 5. In [Activation and characterization], the state of charge (ΔSOC) of the cell when, after the activation, the cell was charged by the constant current method at a current value of 1 C until the cell voltage reached the upper limit (4.50 V), was calculated. The result is shown in Table 2.

**Table 1**

| | Mn/(Mn+Fe) of LMFP | Layer structure | LFP/(LMFP+LFP) of the first cathode layer | LFP/(LMFP+LFP) of the entire cathode layer | Upper limit voltage of the battery | ΔSOC when charged at 1 C |
|---|---|---|---|---|---|---|
| | % by mole | | % by mass | % by mass | V | % |
| Example 1 | 50 | Two-layered | 20 | 10 | 4.30 | 72 |
| Comparative Example 1 | 50 | Single-layered | - | 0 | 4.30 | 38 |
| Comparative Example 2 | 50 | Single-layered | - | 10 | 4.30 | 44 |
| Comparative Example 3 | 50 | Single-layered | - | 20 | 4.30 | 52 |
| Example 2 | 50 | Two-layered | 10 | 5 | 4.30 | 57 |
| Example 3 | 60 | Two-layered | 20 | 10 | 4.30 | 69 |
| Comparative Example 4 | 60 | Single-layered | - | 0 | 4.30 | 32 |
| Comparative Example 5 | 60 | Single-layered | - | 10 | 4.30 | 37 |
| Example 4 | 75 | Two-layered | 20 | 10 | 4.30 | 58 |
| Comparative Example 6 | 75 | Single-layered | - | 0 | 4.30 | 21 |
| Comparative Example 7 | 75 | Single-layered | - | 10 | 4.30 | 25 |

**Table 2**

| | Mn/(Mn+Fe) of LMFP | Layer structure | LFP/(LMFP+LFP) of the first cathode layer | LFP/(LMFP+LFP) of the entire cathode layer | Upper limit voltage of the battery | ΔSOC when charged at 1 C |
|---|---|---|---|---|---|---|
| | % by mole | | % by mass | % by mass | V | % |
| Example 3 | 60 | Two-layered | 20 | 10 | 4.30 | 69 |
| Comparative Example 4 | 60 | Single-layered | - | 0 | 4.30 | 32 |
| Comparative Example 8 | 60 | Single-layered | - | 0 | 4.35 | 44 |
| Comparative Example 9 | 60 | Single-layered | - | 0 | 4.40 | 53 |
| Comparative Example 10 | 60 | Single-layered | - | 0 | 4.45 | 68 |
| Comparative Example 11 | 60 | Single-layered | - | 0 | 4.50 | 75 |

### [Comparison of the batteries using the LMFPs having the same ratio of Mn]

The cathode layers of Examples 1 to 4 have the two-layered structure consisting of the first cathode layer and the second cathode layer, and the LFP was contained as the first cathode active material in the first cathode layer.

A comparison between the batteries of Examples 1 and 2 and Comparative Examples 1 to 3, which were batteries using the LMFPs having the same ratio of the Mn as the second cathode active material, revealed that the state of charge (ΔSOC) when fast-charged at 1 C was higher in the batteries of Examples 1 and 2 than in the batteries of Comparative Examples 1 to 3. A comparison between the batteries of Comparative Examples 1 to 3 revealed that the state of charge (ΔSOC) when fast-charged at 1 C was improved by increasing the content of the LFP; however, the improvement is less than that of Examples 1 and 2.

A comparison between the batteries of Example 3 and Comparative Examples 5 and 6, which were batteries using the LMFPs having the same ratio of the Mn as the second cathode active material, revealed that the state of charge (ΔSOC) when fast-charged at 1 C was higher in the battery of Example 3 than in the batteries of Comparative Examples 5 and 6.

A comparison between the batteries of Example 4 and Comparative Examples 7 and 8, which were batteries using the LMFPs having the same ratio of the Mn as the second cathode active material, revealed that the state of charge (ΔSOC) when fast-charged at 1 C was higher in the battery of Example 4 than in the batteries of Comparative Examples 7 and 8.

From the above results, it was revealed that the fast charge performance of the batteries is improved by incorporating the LFP in the first cathode layer that was the electrolyte layer-side cathode layer of the cathode layer having the two-layered structure, rather than incorporating the LFP and LMFP in the cathode layer having the single-layered structure.

### [Comparison of the batteries that were different in the content of the LFP contained in the cathode layer having the two-layered structure]

A comparison between the batteries of Examples 1 and 2 revealed that the state of charge (ΔSOC) when fast-charged at 1 C was higher in the battery of Example 1, in which the content of the LFP as the first cathode active material in the first cathode layer was high, than in the battery of Example 2.

### [Comparison of the batteries using the LMFPs that were different in the ratio of the Mn contained in the cathode layer having the two-layered structure]

A comparison between the batteries of Examples 1, 3 and 4, which were batteries using the LMFPs having different ratios of the Mn as the second cathode active material, revealed that the state of charge (ΔSOC) when fast-charged at 1 C was higher in the battery of Example 1 than in the batteries of Examples 3 and 4.

As the ratio of the Mn in the LMFP increases, the fast charge performance of the batteries decreases. However, the fast charge performance of the batteries can be improved by incorporating the LFP in the first cathode layer, even in the case of using the LMFP which the ratio of the Mn is high.

### [Comparison between the batteries having different upper limit voltages]

A comparison between the batteries of Comparative Examples 4 and 8 to 11 revealed the following: when the upper limit voltage of the batteries was increased from 4.30 V to 4.50 V, the time required to reach the upper limit voltage took longer, and the fast charge performance of the batteries was improved, accordingly. The state of charge (ΔSOC) of the battery of Comparative Example 10 when fast-charged at 1 C, which the upper limit voltage was increased to 4.45 V, was almost the same as the state of charge (ΔSOC) of the battery of Example 3 when fast-charged at 1 C. However, when the upper limit voltage of the batteries is increased, the electrolyte is likely to decompose, and the amount of generated gas increases, resulting in shorter battery life.

### REFERENCE SIGNS LIST

- 10.: Cathode collector
- 20.: Cathode layer
- 21.: First cathode layer
- 22.: Second cathode layer
- 30.: Electrolyte layer
- 40.: Anode layer
- 50.: Anode collector
- 60.: LFP
- 100.: Battery

## Claims

1. A battery (100) comprising a cathode, an electrolyte layer (30) and an anode in this order,
wherein the cathode comprising a cathode layer (20) and a cathode collector (10) in this order from the electrolyte layer (30) side;
wherein the cathode layer (20) comprises, as the cathode active material, a lithium manganese iron phosphate (LMFP) having an olivine structure and a lithium iron phosphate (LFP) having an olivine structure having an olivine structure;
wherein an upper limit voltage of the battery (100) is less than 4.45 V; and
wherein, when the cathode layer (20) is divided into two equal parts in thickness direction and, of the two equal parts, one part on the electrolyte layer (30) side and the other part on the cathode collector (10) side are considered as a first cathode layer (21) and a second cathode layer (22), respectively, a content of the lithium iron phosphate in the first cathode layer (21) is larger than a content of the lithium iron phosphate in the second cathode layer (22).

2. The battery (100) according to claim 1, wherein, in the second cathode layer (22) on the cathode collector (10) side, a ratio of the lithium iron phosphate to a total of the lithium manganese iron phosphate and the lithium iron phosphate is less than 10% by mass.

3. The battery (100) according to claim 1 or 2, wherein, in the lithium manganese iron phosphate, a ratio of Mn to a total of Mn and Fe (Mn/(Mn+Fe)) is 50% by mole or more.

4. The battery (100) according to any one of claims 1 to 3, wherein the upper limit voltage of the battery (100) is 4.40 V or less.

5. The battery (100) according to any one of claims 1 to 4, wherein, in the first cathode layer (21) on the electrolyte layer (30) side, a ratio of the lithium iron phosphate to a total of the lithium manganese iron phosphate and the lithium iron phosphate is 20% by mass or more.
